# EUROPEAN PATENT APPLICATION

(11) **EP 2 261 608 A1**
(43) Date of publication of application: **15.12.2010**
(21) Application number: 09723270.6
(22) Date of filing: 18.03.2009
(51) Int. Cl.: G01D 4/00

(54) **WIRELESS SYSTEM AND METHOD FOR REMOTELY READING COUNTERS**

(30) Priority: 18.03.2008 ES 200800795
(71) Applicant: Wayra Networks, S.L., 08019 Barcelona (ES)
(72) Inventor: LUÍS SÁNCHEZ, Fernando, E-08019 Barcelona (ES); TOBEÑA ANDREU, Joan, E-08019 Barcelona (ES)
(74) Representative: Mohammadian, Dario
(86) International application number: PCT/ES2009/000154
(87) International publication number: WO 2009/115627

(57) **Abstract**

The invention relates to a wireless system for remotely reading meters, comprising: at least one storage device (100) connected to, or built into a meter, including means (2) for storing data relating to consumption; at least one concentrator device (200); and a central device (400). The storage device (100) includes means (1, 5, 6) for transmitting consumption-related data to the concentrator device via a narrowband network (500) operating in a free-use frequency band. The concentrator device includes means for retransmitting said data to the central device (400) via a broadband network (600) operating in a free-use frequency band.

## Description

### FIELD OF THE INVENTION

The invention disclosed herein relates to the field of remote reading of water, gas and electricity meters.

### BACKGROUND OF THE INVENTION

Historically, consumption information has been read from meters by a person accessing each home and recording the reading. This represented, and represents, several drawbacks, such as personnel and travelling costs, incorrect readings, impossibility of accessing the meter when the subscriber is absent, etcetera.

Technological advances have meant that these tasks can be performed in a more automated manner, by including radio systems allowing remote reading. These wireless technologies can emit in free-use frequency bands (for example, 868 MHz, 915MHz) or in bands in which communication implies a cost (for example, GPRS). In the former case, as these are short-range systems, it is still necessary to have a person travel to the subscribers' homes to collect the data. Although data collection is faster with this system (it can be performed from inside a vehicle), there remain some evident associated costs. In the latter case, there is no need for displacement of personnel but each time data are sent there is the cost associated to the service provider: the telephone company.

In the case of costs associated to communications, there is the solution by Innovatec Corporation of an "*Automatic meter reading data communication system*", patent WO 98/10394, which specifies a wireless system in which long-distance communications are based on mobile telephone devices (of various types), conventional telephone devices or via satellite.

Other remote reading systems exist that prefer mixed solutions: for short-range communications between devices radio solutions are used, and for data transmission to the headquarters cable-based technology is used (for example, Ethernet, PSTN). This is the case, for example, in patent application WO 2004/090831 by Chaos Co., "*Network-based remote meter reading system*", LTD, which teaches a wireless remote meter reading system wherein the data are monitored inside the subscribers' home and sent remotely through a cable means (telephone line or electrical grid (PLC)).

US Patent 6,975,862 by Lucent Technologies Inc. "*Wireless telemetering access*" relates to a general system for telemetering from the provider's headquarters to the customer's address. The various devices of several customers connect wirelessly to a central concentrator unit. However, the link between said concentrator and the provider's headquarter is established by telephone, so that there remains a cost associated to the transmission of data.

Patent application WO 00/57382 by Conectisys Corporation "*A wireless AMR network*" specifically mentions a system for sending consumption information via radio from the meters to a nearby central unit. From there, the link with the billing center is implemented via Internet, telephone or the like. Again, there is an added cost to the system. Moreover, it implies contracting a telecommunications service provider (for example, the telephone company) external to the installation, with system maintenance being in the hands of a third party, on whom the communications depend.

One of the main problems for the efficiency of these types of systems is also not resolved if there is a cost of communications used to transmit consumption data. This is the restriction on the number of times that the units storing the consumption can communicate with the headquarters. It is self-evident that if it is necessary to pay each time a communication is established, the greater the number of connections the higher the costs will be.

A document that deals with part of the above-described drawbacks is patent application WO 2006/029315. This document discloses a wireless system for remote meter reading that includes a plurality of meters. a collection device and a central communications server. The meters send consumption data to the collection device, or to the server, via a wireless communication network such as Wi-Fi or WiMax. The Wi-Fi and/or WiMax network can operate independently of, or in collaboration with, existing wireless data-collection networks.

However, the use of Wi-Fi or WiMax for communications between the meters and the collection device is not efficient, as these are both broadband protocols and the meters send small amounts of data to the collection device, as well as in very long intervals.

### DESCRIPTION OF THE INVENTION

The present invention solves the aforementioned drawbacks as embodied in the wireless remote meter reading system of claim 1, the method of remote meter reading of claim 12 and the computer program of claim 13. The dependent claims relate to preferred embodiments of the invention.

According to the invention the serious drawback of the cost of communications is solved. In this way, utility companies can obtain more information on the consumption habits of their customers and thereby create specific profiles for each one. This allows the utility company to improve the service to its customers, rewarding those who consume more rationally, penalising those who waste energy, and, indirectly resulting in energy savings with the corresponding benefits to society, whether or not they are customers.

Another desirable aspect of the invention proposed is that the network created for remote reading is private. That is, the units belong to the utility company, which manages its own network, which will have an authentication and data encryption system throughout the network. The importance of this aspect lies in that there is no dependency on a third party that provides the telecommunications service to make communication possible (for example, Internet service provider, telephone company for sending information via GPRS). The entire data management is constantly under the utility company's control, as if it were an internal private network.

Another advantage of the system is that the storage device that is connected to the meters provides non-electronic meters with "intelligence". "Intelligence" is understood as adding functions to the meter that it did not have before the coupling of this device. Some of these functionalities are storing data in a ferromagnetic memory, which allows data to be stored for 45 years without corrupting. Other functionalities include the detection of anomalous functioning (alarms), such as theft of the unit, sabotage ofthe communications cables, sabotage of the unit, leaks, etcetera.

### DESCRIPTION OF THE DRAWINGS

To complete the description and in order to aid a better understanding of the aspects of the invention, according to a preferred embodiment thereof, a set of drawings is accompanied as an integral part of the description where for purposes of illustration only and in a non-limiting sense, the following is shown:
FIG. 1 - Depicts a standard system installation according to an embodiment of the present invention.
FIG.2 - Depicts a block diagram of the storage device according to an embodiment of the present invention.
FIG.3 - Depicts a block diagram of a concentration device according to an embodiment of the present invention.

### PREFERRED EMBODIMENTS OF THE INVENTION

In view of the aforementioned figures a preferred embodiment of the invention is described below.

Throughout this document the term "comprise" and its derivatives should not be interpreted in an excluding or limiting sense. This is, it should not be interpreted as to exclude the possibility that the element or concept to which it refers includes additional elements or stages.

Throughout this document the term "narrowband network" should be understood as referring to a network that allows communications at a rate under 0.5 Mbit/s and the term "broadband network" should be understood as referring to a network that allows communications at a rate above 0.5 Mbit/s.

### General description of the system according to the invention

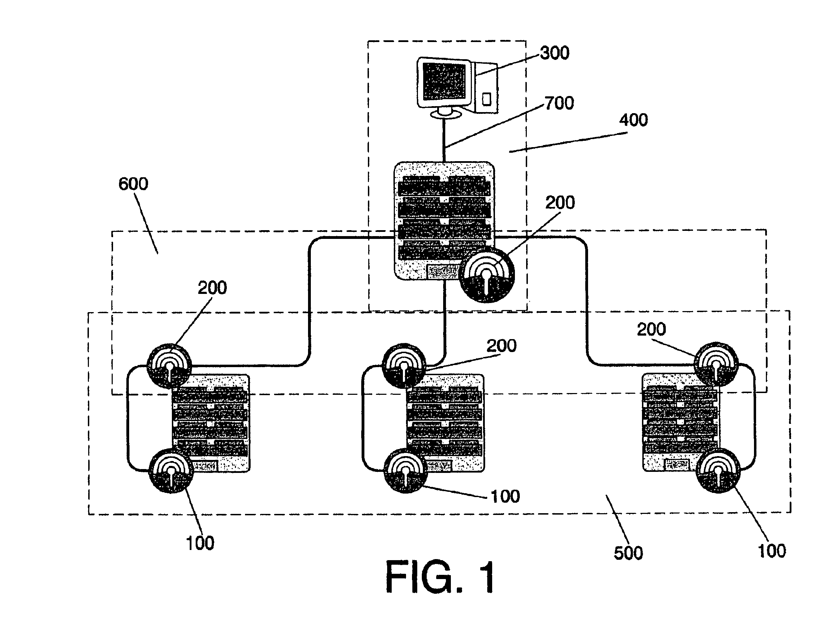

FIG.1 depicts a standard installation of the system according to an embodiment ofthe invention.

The system is formed by three physical elements, two of which are hardware and one of which is software:
- A storage device 100, which is an electronic hardware device connected, at least, to one meter, or integrated in a meter.
- A concentration device 200, which is an electronic hardware device that receives data from, at least, one storage device 100.
- A server 300 that runs the general system management software.

The topology shown in FIG. 1 represents a typical installation for assembling the proposed system. In a general sense, some storage devices 100 connected to water, gas and/or electricity meters are provided. These store the consumptions of these meters. At predefined time intervals these units send the stored data to the concentration device 200, which acts as a concentrator / gateway. This device has sufficient capacity allowing it to store data from several meters. Finally, all the concentrators send the data to the concentration device 200 located in the billing center, connected to a server 300 (or computer in general) using any type of serial connection 700 (typically USB) or network cable (typically Ethernet). The concentration device 200 located in the billing center and the server 300 together make up the central device 400.

All communications are wireless. Communications between the storage devices 100 and the concentration devices 200 take place over a narrowband network 500, typically for short-range communications (typically a maximum of 300m in open field) that works according to the standard IEEE 802.15.4 (Zigbee). For communications between the concentration devices 200 and the central device 400, which are long range (several kilometers in open field or with obstacles) a broadband network is used, preferably according to standard IEEE 802.16d/e (WiMax).

The narrowband network is limited to sending data between the various devices installed in the residential building, or buildings. The broadband network carries the data collected in each building to the billing center.

### Description of the storage device 100

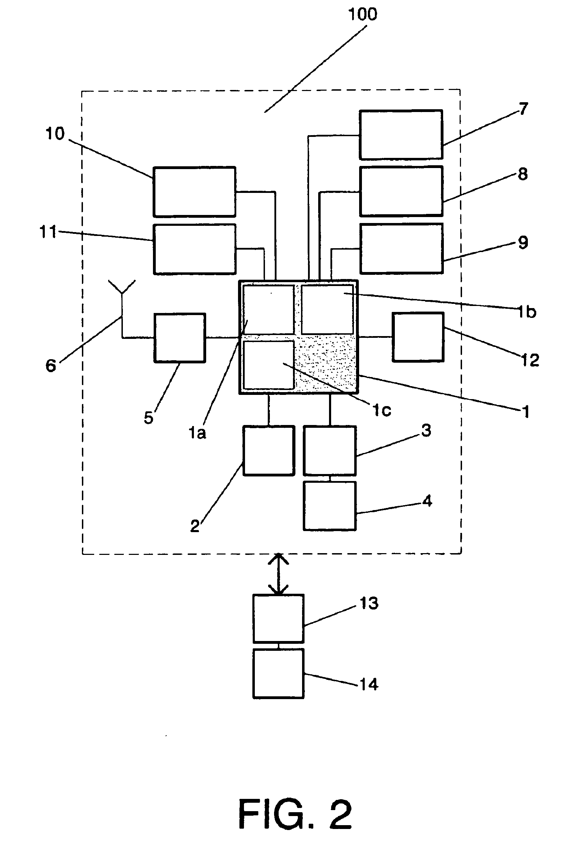

FIG.2 depicts a block diagram of the storage device 100 according to an embodiment of the invention. This device comprises the following components:
- A module 1 including one MCU 1a (Microcontroller Unit), one RF transceiver 1b and one integrated circuit 1c with the physical address of the unit (MAC address). The integrated circuit 1c can also be located outside of the module.
- An external ferromagnetic memory (FRAM) 2 for storing consumption data.
- A very low battery consumption integrated clock 3 (real-time clock, RTC).
- A quartz crystal 4 for the RTC.
- An impedance matching stage 5 between the radio-frequency (RF) output of the module and the antenna.
- A fractal integrated antenna 6 for PCB, typically for 2.4 GHz.
- A first relay 7 (Reed switch, blade interrupter) for reading meters with a magnet.
- Four-wire connectors 8, 9 for reading an external pulse emitter that allows detecting a severed cable.
- Device motion detection means 10 in the form of a second relay (tilt switch) or accelerometer.
- Means 11 for detecting the application of a magnet to the unit in the form of a third relay (Reed switch) for detecting if a magnet is applied to the unit.
- Reference voltage value 12 for battery measurement.
- Regulation and filtering stage 13 for the circuit power supply.
- Battery 14 for supplying power to the circuit.

The storage device 100 is an electronic hardware device that allows gathering consumption data from up to three water, gas and/or electricity meters. There are three different ways in which the device can store and in fact be integrated in the meters:
- In the case of mechanical meters, these have a wheel that turns when there is consumption. This wheel has a magnet, so that aligning the relay 7 of the device with this wheel allows counting the pulses that are produced. In this way, it is possible to meter the consumption produced.
- In the case of (most) mechanical meters, these can also comprise a cable with a direct output for pulses. Two meters of this type may be connected using the double connector 8 and 9 of the device.
- In the case of electronic meters, and with the agreement of the meter manufacturer, the device can be integrated in the meter.

The pulse signals collected by the device are filtered by hardware stages and/or by software algorithms. Once processed by the microcontroller, they are stored in the ferromagnetic memory 2 (FRAM). This represents a technological advantage compared to known systems as regards performance. Considering that consumption data are critical data, the FRAM ensure the storage of these during 45 years without the data corrupting.

The device is typically powered (but not limited to) by a large capacity Lithium-Thionyl (Li-SOCl₂) 3.6V battery 14 which must guarantee a useful lifetime of no less than 10 years. In view of this, the default state of the device in order to save power is the sleep mode (hibernation or rest). When the circuit receives a pulse from the meter because there is consumption, an interrupt is generated that places the microcontroller out of sleep mode so that it carries out the tasks related to the data processing algorithm. The next step is storing the data in the FRAM memory and returning to sleep state or mode.

In an incident-free operation, according to a predefined time interval predetermined during the unit's configuration, the device 100 sends the gathered data to the concentration device 200. However, the device 100 can also operate by events, this is, asynchronously (for example, in case of the generation of an alarm). Information is transmitted with the radio-frequency (RF) transceiver 1b tuned to the 2.4GHz band (ISM free-use band) and the antenna 6, which is of the fractal type, more efficient than those used normally in this type of applications. Typically, the communications protocol used is Zigbee, based on standard IEEE 802.15.4. The output emission power of the units ranges from -17 to +3 dBm, which represents a theoretical range of 200-300m in open field. For the frequency used, 16 channels are disposed according to a protocol that manages which one is used as a function of the interference level existing at the time of communication.

As stated beforehand, the information stored by the device 100 is sent periodically to the corresponding concentration device 200. These time periods are configurable at all times. They are controlled by the integrated clock 3 that the system uses as a reference. According to its programming, an interrupt is transmitted to the microcontroller at the corresponding time.

Although it is generally the device 100 that takes the initiative in the communication with the concentration device 200, this communication is bidirectional and the device 100 can be queried at any time by a concentration device 200.

Another innovative aspect as regards security is that all information is encrypted using AES (Abstract Advanced Encryption Standard) 128, which is a differentiating feature in relation to previously known technologies.

The device implements a software that manages all the operation of the hardware. This software corresponds to some, or all, layers of the reference model for Open System Interconnection (OSI) that are above the physical layer (PHY layer) and the medium access layer (MAC layer), which are managed by standard IEEE 802.15.4 (Zigbee).

The concentration device 200 has the software in charge of routing the data between the storage device and the concentration device, as well as the part responsible for the application. The operation of this software is described in detail further on.

The application consists of the following main points, which are not the only ones:
- It allows reading the pulses corresponding to the consumption. And it is also in charge of the part corresponding to filtering it.
- It allows monitoring the state of the battery, comparing its measured value to a fixed value set by the hardware.
- It allows monitoring the position of the unit, detecting displacements with respect to the Y axis of more than 45°, to allow warning on possible theft of the unit.
- It allows monitoring the state of a relay that detects if someone wants to sabotage the meter by bringing a magnet close to it.
- It allows monitoring the state of the connection cable between a meter and the board itself. This allows detecting a sabotage attempt in case the pulse transmission cable is cut.
- It allows identifying leaks in the network.
- It allows identifying changes in the direction of operation of mechanical counters.
- In general, it allows an optimum management of the circuit's power consumption specific to the circuit itself, generally by emission-power management algorithms and managing the operation modes of the microcontroller.
- It allows writing and reading consumption data in a ferromagnetic memory (FRAM).
- It allows managing times by writing and reading a RTC.
- It allows cutting off power by acting on an electrovalve.
- It allows updating the firmware of the device wirelessly and automatically.

The functional improvement resulting from connecting a device to a mechanical meter that is not provided with any of the aforementioned capabilities is evident. In the case of electronic meters, the technology presented gives the product a wider range of possibilities, as well as a system for communication with other devices.

The metering device is an innovative product in itself as regards hardware, as it integrates last-generation components which are normally used in other types of applications but which, when integrated in a single design, allow obtaining excellent performance results at a lower cost. Thus, in addition to the aforementioned advantage of integrating a FRAM memory is added the integration of the microcontroller and the RF transceiver in a single module for obtaining a smaller final circuit, as well as the use of a fractal antenna that is smaller and more efficient.

### Description of the concentration device 200

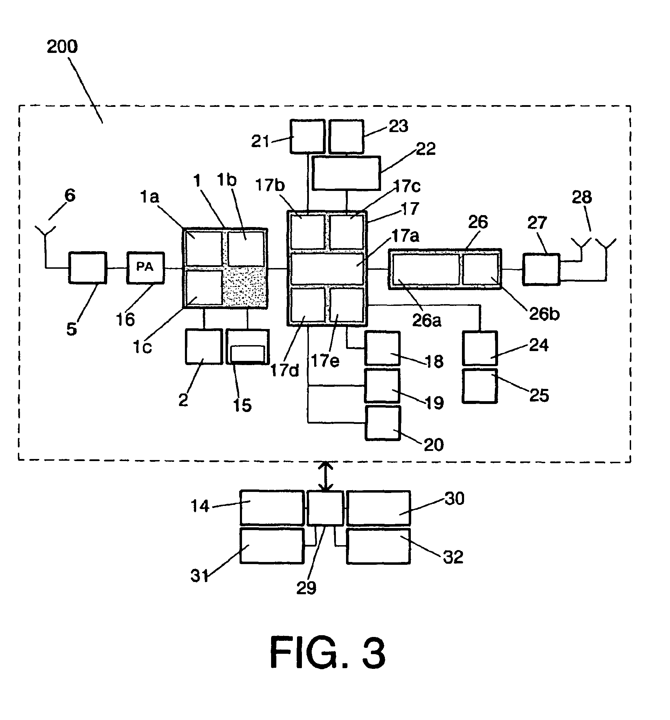

FIG. 3 shows a block diagram of the concentration device 200 according to an embodiment of the invention. This device comprises the following components:
- A module I with an integrated microcontroller 1a and the RF transceiver 1b tuned in the 2.4GHz band (free-use ISM band). The module 1 also comprises an integrated circuit 1c with the physical address of the unit (MAC address).
- A ferromagnetic memory 2 (FRAM) for storing the consumption data.
- An impedance matching stage 5 between the RF output of the module and the antenna.
- An integrated fractal antenna 6 for PCB, typically for 2.4GHz.
- A battery 14 that powers the circuit as a backup system in case the other power supply systems fail.
- A clock (RTC) 15 with an integrated quartz crystal as a time reference for the Zigbee module.
- An emission amplifier stage 16 to improve coverage, respecting the regulatory laws of each country.
- A 32-bit microcontroller 17 for managing the operating system of the circuit and its integrated peripherals, namely an MCU 17a, one or several connectors 17b, one or several Ethernet connectors 17c, one EBI (Expansion

Bus Interface) 17d and one MCI (Media Control Interface) 17e.
- An SD or MMC memory 18.
- A memory 19 of the Flash type for storing program data (operating system).
- A memory 20 of the SDRAM type for running the operating system.
- One or several USB connectors 21 (MiniOTG, Host, etcetera.).
- One Ethernet controller 22 with PHY and MAC layer implementation. Alternatively or additionally, the concentration device 200 can comprise controllers for communication via some of the following means: wireless USB, RS-232, RS-485, Wi-Fi, Bluetooth or, in general, any wired or wireless system that allows interconnectivity ofthe devices.
- One or several Ethernet connectors 23.
- Multicard reader controller (not shown in FIG. 3) for Compact Flash (CF), Multimedia Memory Card (MMC), PCMCIA, PCI or, in general, any type of card allowing to integrate an external card in the original circuit (such as a Wi-Fi CF, GPS CF, etcetera.).
- A clock (RTC) 24 as the time reference of the 32-bit microcontroller.
- A quartz crystal 25 of the microcontroller's RTC.
- A WiMax RF module 26. Its component elements will depend on the state of the art. Typically, they will be an integrated circuit with the PHY and MAC layers 26a and a RF transceiver 26b tuned to free-use bands with MIMO (multiple input multiple output) capability.
- An impedance matching stage 27 between the RF output of module 26 and the antenna.
- One or more antennas 28, typically for free-use bands. The WiMax stage formed by elements 26, 27 and 28 can consist of one or several integrated circuits, depending on the manufacturer or the state of the art at the time. This includes the elements that implement an increased spectral efficiency of the system, which in addition to the aforementioned MIMO, can be an AAS (Adaptive Antenna System), or any other system with the same purpose.
- A regulating and filtering stage 29 for the circuit power supply. It can consist of an external power supply.
- A connection to the power grid 30 (low-voltage grid).
- A connection to the unit's power supply 31 via USB or PoE (Power over Ethernet).
- A solar panel-based power supply system 32 . This comprises the capture system, regulation and filtering stage and energy storage system.

The concentration device 200 is an electronic hardware device that allows storing the consumption data obtained from various storage devices 100, which acts as a communications gateway to receive the data via Zigbee and transmitting them via WiMax (protocol based on standard IEEE 802.16), as well as a gateway for integration with other devices (for example, connection of the concentration device 200 to a PC using a USB).

The device 200 can have a simpler version intended for small installations, such as towns with a population of less than 1000 inhabitants. In this case it does not have WiMax connectivity and in general has reduced functionalities.

For the purposes of this application, FIG. 3 shows the full version of the concentration device 200.

The function of the concentration device 200 is to actias a link between the storage devices 100 connected to the meters and a user device (for example, a PC or a server PC). To do so, it allows receiving data via the Zigbee network and sending this data via a WiMax network, or any existing standard connection system (for example, USB, Ethernet, etcetera.).

The firmware of the concentration device 200 can be updated at any time, and automatically when there is a new version available, without affecting the operation of the network.

The concentration device 200 can operate in the network as a repeating device or as a coordination device. In the first case its purpose is to act as a link between two points which by themselves do not have sufficient coverage to communicate with eachother. In the second case its function is to act as a central node of the network, and as indicated by its name, coordinate the communications that take place in the network.

In short, the installation of several devices 200 allows creating a meshed wireless network. This means that a routing protocol allows intelligent communications between the device. That is, paths are discovered that allow transmitting the information. Moreover, if the information was to be sent by a device 200 that is not operative, the emitting unit automatically looks for another device through which the information can be sent.

Communications via WiMax (based on standard IEEE 802.16) are bidirectional. Typically, the coverage distances reach tens of kilometers and the bandwidth is on the order of tens of Mbit/s, depending on the manufacturer and the state of the art.

The system disclosed in this memory is implemented following the specification IEEE 802.16d, that is, using a fixed WiMax network. This does not rule out that in the future it could be implemented on specification IEEE 802.16e (mobile applications) as this is compatible with the prior one.

The use of WiMax allows functions such as user authentication, data encryption, implements Quality of Service (QoS) functions, and other systems related to network security and management.

The system object of this application represents the possibility for utility companies to enter the telecommunications market with infrastructure costs well below normal values. That is, it allows having a direct communications link with their customers to provide value-added services such as Internet access, television and radio channels, video on demand (VoD), IP telephony (VoIP), etcetera.

### Description of the management software

The management software is a software tool that allows the configuration, supervision and management of the network. This management comprises processing the consumption data received through the concentration device 200 that acts as a coordinator.

The management software is typically installed on a PC or server, depending on the characteristics of the installation and the volume of data that must be processed.

The function of the management software is to provide an interface between the system installed (the network infrastructure), the person responsible for the system (a technician or worker) or another system (for example, the billing software of another company). Thus, the management software can have an intuitive graphic interface for interaction with a person, or simply be a software tool that acts as a data link between the system installed and the software of another company.

The management software has or can have the following functionalities:
- Bidirectional communication with the units for configuration and general maintenance tasks.
- User management for accessing the system with different permission levels using authentication.
- Integration of a Geographical Information System (GIS) with maps and coordinates of the installations.
- Storing consumption information in relational databases (for example, Oracle, MySQL, etcetera.).
- Displaying consumption information and consumption history graphically or in tables.
- Displaying subscriber details: first and last name, subscriber number, address, etcetera.
- Displaying system alerts by activating the AZM alarms.
- Information can be displayed with a desktop unit (such as a desktop PC) or any other, fixed or mobile, device with Web connectivity.
- Exporting data by generating reports in standard formats (for example, Word, Excel, PDF, etcetera.)
- Allowing external access by a subscriber to look up their history through standard security protocols (for example, SSL, IpSec, etcetera.).

### Description of the firmware: configuration, routing and application

The system is able to operate thanks to its embedded software (*firmware*).

According to functionality it can be divided into three parts or modules related to one another: the configuration module, the routing module and the application module (*middleware*).

### Configuration module

This is the algorithm used to manage the process of registering new units in the network.

Each storage device 100 is factory set with a unique number that identifies it (MAC address). During field installation when the device 100 is turned on for the first time it will search for a network with which to associate that is of course within its range. Thus, typically the device 100 begins to emit with a power of -3 dBm requesting to join a network (to a concentration device 200). If in this case the device 100 does not detect any network it will gradually increase the emitting power to a maximum of +3dBm.

Once the storage device 100 establishes a connection with the concentration device 200 the latter gives it a logical address for identifying it in the network, as well as the network identifier itself.

In short, the concentration device 200 is responsible for registering storage devices 100 in the network. If in case the storage device 100 is removed from its location beyond the coverage of the concentration device 200 it is automatically unregistered. This means that the network is self-managed.

### Routing module

This is the algorithm used to manage the paths of communications in the network.

This is necessary because the storage devices 100 have limited coverage, as they emit with the lowest possible power to save battery power. For this reason, it is sometimes necessary to install concentration devices 200 that simply act as repeaters between storage devices 100 and the concentration device 200 that acts as network coordinator. The advantage of this system is the creation of large networks without requiring devices with high power consumption.

The devices 200 execute a network algorithm that allows a frame transmitted by the storage device 100 to reach the concentration device 200 that acts as coordinator. The optimum path is established as the one with the highest quality, as determined by the link quality index (LQI) and the lowest possible number of hops. Just as path tables allow frames from storage devices 100 to select alternative paths in case of anomalous operation (network visibility, congestion, etcetera.) of the link of a repeater.

The routing protocols used to implement the Zigbee network layer is based on reactive routing protocols, so that the paths between source and destination are created when the frames are transmitted. For the specific case of the firmware application it is possible to use standard protocols (AODV, LOAD, DSR, DYMO etcetera.) but adapting them and setting up certain parameters to improve the performance with respect to the characteristics of the devices used and considering the type of frame used.

### Application module (middleware)

Above the network layer is the application layer, which stores information on the devices and allows linking to the computer (or server) 300 placed in the billing center.

The consumption data are stored according to a data structure in the storage devices 100. This makes them available in memory until they are sent to the corresponding controller device 200 and it is confirmed that data corruption did not occur during delivery.

The units typically (but not being limited to it) store the following information in one or several data structures:
- Network identifier
- Logical address of the units
- Physical address of the units
- Function of the devices 200 in the network (routers)
- Value of the reading(s)
- Battery level
- Status of network links
- Alarms of units and/or the system
- Date of the event
- Firmware version.

The data structures are dynamic in order to transmit at all times the least amount of information necessary. The objective is to ensure that the unit uses as little information as possible.

The application software module allows updating the software images of the units' firmware via radio. This is possible by directly accessing a unit (one hop) or accessing it via other units (*multihopping*). Security in information transfer is guaranteed by the use of error detection mechanisms (for example, CRC) preventing the image to save from being corrupted.

This application software (*middleware*) makes the communication between the controlling devices 200 and the server 300 of the billing center independent of the link between them (Ethernet, USB, etcetera.).

The controller devices 200 have a storage system in which information is saved from all the storage devices 100 that it manages. This storage system is highly optimised given the impossibility of predicting the periodicity of the measurements to make. This can mean that a large amount of information is generated in a short time.

Typically, middleware is used for communication between the devices and the database servers, but its function also involves exchanging data between systems with different data structures (XML, *Web Services,* SOAP, etcetera.).

## Claims

1. Wireless system for remote meter reading, comprising:
at least one storage device (100) connected to a meter or integrated in a meter, comprising storage means (2) for storing consumption data;
at least one concentration device (200); and
one central device (400);
**characterised in that**
the storage device (100) comprises means (1,5,6) for sending the consumption data to the concentration device (200) over a narrowband network (500) that operates in a free-use frequency band; and
the concentration device (200) comprises means for resending this data to the central device (400) over a broadband network (600) that operates in a free-use frequency band.

2. System according to claim 1, **characterised in that** the system comprises data encryption means.

3. System according to claims 1 or 2, **characterised in that** the central device (400) comprises a concentration device (200) and a server or computer (300) with management software connected to the concentration device (200).

4. System according to any of the preceding claims, **characterised in that** the narrowband network (500) operates according to the Zigbee protocol.

5. System according to any of the preceding claims, **characterised in that** the broadband network (600) operates according to the WiMax protocol.

6. System according to any of the preceding claims, **characterised in that** the means for storing consumption data consists of a ferromagnetic type memory (2).

7. System according to any of the preceding claims, **characterised in that** the storage device (100) is powered by a battery (14).

8. System according to any of the preceding claims, **characterised in that** the storage device (100) comprises an internal clock (3).

9. System according to any of the preceding claims, **characterised in that** the storage device (100) comprises means for detecting the motion of the device (10).

10. System according to any of the preceding claims, **characterised in that** the storage device comprises means for detecting the application of a magnet to the unit (11).

11. System according to any of the preceding claims, **characterised in that** the concentration device (200) comprises means for routing data between the storage device (100) and the concentration device (200).

12. Method for remote meter reading comprising the following steps:
storing consumption data in at least one storage device (100) connected to a meter or integrated in a meter; **characterised by**
sending consumption data from the storage device (100) to a concentration device (200) over a narrowband network (500) that operates in a free-use frequency band;
resending this data from the concentration device (200) to a central device (400) over a broadband network (600) that operates in a free-use frequency band.

13. A computer program that comprises code means adapted to carry out the steps of claim 12, whenever this program is run on a processor.
